# EUROPEAN PATENT SPECIFICATION

(11) **EP 3 470 386 B1**
(45) Date of publication and mention of the grant of the patent: **08.01.2020**
(21) Application number: 17382674.4
(22) Date of filing: 11.10.2017
(51) Int. Cl.: C05F 5/00, C10L 9/08, C10L 5/44

(54) **METHOD FOR TREATING THE BIOMASS OF LIGNOCELLULOSIC AGRICULTURAL WASTE AND/OR WASTE CONTAINING PHENOLIC FUNCTIONAL GROUPS**
VERFAHREN ZUR BEHANDLUNG DER BIOMASSE VON LIGNOCELLULOSISCHEM LANDWIRTSCHAFTLICHEM ABFALL UND/ODER VON ABFALL MIT PHENOLISCHEN FUNKTIONELLEN GRUPPEN
PROCÉDÉ DE TRAITEMENT DE LA BIOMASSE DE DÉCHETS AGRICOLES LIGNOCELLULOSIQUES ET/OU DE DÉCHETS CONTENANT DES GROUPES FONCTIONNELS PHÉNOLIQUES

(43) Date of publication of application: 17.04.2019
(73) Proprietor: Energies Tèrmiques Bàsiques, SL, 08022 Barcelona (ES)
(72) Inventor: ALIER URIACH, Santiago, 08022 Barcelona (ES)
(74) Representative: Juncosa Miró, Jaime

(56) References cited:
- EP-A1- 3 048 161
- WO-A1-2016/170439
- US-A1- 2012 111 714
- US-A1- 2013 326 935
- US-A1- 2015 321 980

## Description

### Field of the Art

The present invention relates to the field of methods for treating the biomass of lignocellulosic agricultural waste and/or agricultural waste containing phenolic functional groups, and is intended for obtaining a product for soil improvement, such as acidity regulators, fertilizers, etc., a biofuel, phenolic products and other by-products.

The treatment of the biomass of the invention includes adding a catalyst to the biomass, where said catalyst mixes with the biomass, and then proceeding with a first drying step in a first reactor for evaporating the water contained in the biomass, and then with a torrefaction step in a second reactor for torrefying the biomass to be treated under anoxic conditions, all for obtaining more valuable products, particularly biofuels and phenolic products, which are extracted in the form of gases that are subsequently liquefied and fractionated.

### State of the Art

The method for the thermochemical treatment of biomass under anoxic conditions, causing torrefaction, pyrolysis or gasification of said biomass is known, with the existence of different plants designed for such purpose.

For example, patent document EP3048161 belonging to the same applicant as the present invention discloses a plant provided with a first reactor and a second reactor that are connected in series to carry out thermal treatment of a biomass introduced into said plant, obtaining a gas fraction that can be condensed.

However, said patent document does not describe a method which allows obtaining biofuels, fertilizers and/or products for soil improvement from the biomass of a wide range of lignocellulosic agricultural waste and/or agricultural waste containing phenolic functional groups by means of adding catalysts and a torrefaction-specific process. In fact, said patent document does not at any time mention the use of catalysts in a thermal reaction within temperature ranges that are the determining factors of a torrefaction reaction.

Many other patent documents disclosing biomass treatment plants allowing, in particular, biomass torrefaction, for example patent documents US2015/321980, ES2321341 and US20140013657, are known, but none of them discloses a method for the torrefaction of the biomass of lignocellulosic agricultural waste and/or agricultural waste containing phenolic functional groups by means of adding catalysts, and operating under specific conditions relating to residence time in each reactor and to temperatures that are the determining factors of specific temperature gradients.

### Brief Description of the Invention

The present invention relates to a method for treating the biomass of lignocellulosic agricultural waste and/or waste containing phenolic functional groups for obtaining a biofuel.

Said method leads to valorization (an increase in value) of the biomass, converting a given product into a different product or products that are more valuable than the original product, such as biofuels.

Said biomass is treated at least in a first elongated thermochemical reaction reactor and a second elongated thermochemical reaction reactor that are connected in line, such that the biomass goes through the first reactor and then the second reactor.

As is known, each of the first and second reactors is provided with:
- a closed cylindrical thermochemical reaction chamber;
- an inlet valve in a position adjacent to the first end of the thermochemical reaction chamber, preventing the free entry of air;
- a gas outlet valve which allows extracting a gas fraction of the treated biomass and a solid outlet valve which allows extracting a solid fraction of the treated biomass, said gas outlet valve and solid outlet valve being provided in positions adjacent to the second end of the thermochemical reaction chamber, preventing the free entry of air;
- a screw conveyor attached to a drive shaft operated by an actuator device;
- a plurality of heaters provided for adjustably heating said thermochemical reaction chamber.

Plants of this type which are provided with two reactors that are connected in line and house a screw conveyor allow performing two different treatments with different conditions, thereby obtaining a different gas fraction in each of the reactors.

The inlet and outlet valves which prevent the free entry of air allow creating near-anoxic or anoxic conditions (with the absence or a low content of oxygen in the inner atmosphere of the reactor). This allows preventing oxidation processes and other chemical reactions which would hinder biofuel production.

It is further contemplated for the heaters to be arranged surrounding the thermochemical reaction chamber and/or in said thermochemical reaction chamber, for example on the actual shaft of the screw conveyor. An embodiment which combines both heaters would allow quick and uniform heating of the reactor content.

The method proposes the following novel steps:
a) introducing the biomass ground to a given particle size into the first reactor through said inlet valve (40), said biomass including a catalyst comprising at least a mixture of calcium and magnesium carbonates;
b) performing a drying step inside the first reactor for a time comprised between 2 and 3 minutes by applying a first temperature gradient ranging from an introduction temperature to a temperature comprised between 120°C and 190°C, causing the evaporation of the water contained in the biomass mixture and obtaining a dry biomass;
c) extracting, through the mentioned gas outlet valve (41) of the first reactor, a gas fraction containing water vapor from the first reactor;
d) introducing into the second reactor, through the inlet valve (40) thereof, the dry biomass previously extracted from the first reactor through the solid outlet valve (42);
e) introducing an inert gas into the second reactor, establishing anoxic atmospheric conditions inside the second reactor;
f) performing a torrefaction step inside the second reactor for a time comprised between 3 and 3.5 minutes by applying a second temperature gradient ranging from an introduction temperature to a temperature comprised between 200°C and 300°C, causing torrefaction of the dry biomass and the reaction thereof with the catalyst, producing a solid fraction useful for soil improvement or as a fertilizer and a torrefied gas fraction;
g) discharging the torrefied gas fraction through the gas outlet valve (41) of the second reactor and liquefying a part of said gas fraction discharged from the second reactor by condensation, obtaining at least an organic liquid phase comprising a C14-C18 biofuel and phenols, and an aqueous liquid phase comprising sugars and acids comprising acetic acid, said liquid phases being able to be separated by density;
h) discharging the torrefied solid fraction through the solid outlet valve (42) of the second reactor, said torrefied solid fraction being able to be used for soil improvement or as a fertilizer.

A drying step is therefore performed in the first reactor, consisting of increasing the temperature of the biomass mixture, which can be introduced into the first reactor at an ambient temperature between 10°C and 25°C, for example, until reaching a temperature comprised between 120°C and 190°C, or more preferably between 160°C and 190°C. Said drying step will be extended for a period of between 2 and 3 minutes, enough to cause most of the moisture contained in the biomass mixture to evaporate, but not enough to degrade or fractionate the compounds required for obtaining biofuel and other phenolic products which will remain in the dry biomass. The evaporated water will be extracted from the first reactor in the form of a gas fraction through the gas outlet valve.

It will be understood that the drying step will last for the time it takes for the biomass to be conveyed from the inlet valve to the solid outlet valve by means of the adjustable-speed screw conveyor.

The biomass introduced into the first reactor will be mixed with a catalyst which will comprise at least a mixture of calcium and magnesium carbonates. Said catalyst will preferably be mixed with the biomass before being introduced into the first reactor, although the catalyst can be supplied to the first reactor separately from the biomass, where the mixing takes place inside the first reactor. The catalyst will therefore reach the second reactor preheated, preventing rises in temperature.

Preferably, the biomass introduced into the first reactor will have a water content equal to or less than 20%, which allows obtaining a completely dry biomass with negligible water content upon the end of the treatment thereof in the first reactor.

The use of biomass with a water content greater than 25% would prevent obtaining dry biomass after passage through the first reactor for the time period the drying step is stipulated to last, which can result in lower treatment process yields, particularly increasing the gas fraction in the second reactor which will also increase the aqueous condensate fraction.

The dry biomass obtained in the first reactor will be extracted therefrom through the solid outlet valve of the first reactor, and introduced into the second reactor through the inlet valve of the second reactor, preventing or minimizing the entry of atmospheric air into said second reactor. It is understood that the solid outlet valve of the first reactor and the inlet valve of the second reactor can be one and the same valve that is shared by both reactors and performs both functions.

To assure anoxic conditions inside the second reactor, an inert gas, for example and preferably, CO₂ and/or N₂, is injected into the second reactor. Said inert gas prevents the outside air from entering the second reactor, and expels any remaining air containing O₂ from the interior of the second reactor.

There is performed inside said second reactor under anoxic conditions a torrefaction step consisting of increasing the temperature of the biomass mixture until reaching a temperature comprised between 200°C and 300°C for a period between 3 and 3.5 minutes, enough to cause torrefaction of the dry biomass, causing a chemical reaction between the catalyst and the lignocellulosic materials and/or phenolic functional groups of the dry biomass, thereby generating the desired, high added value products, including biofuels.

It will be understood that the torrefaction step will last for the time it takes for the dry biomass to be conveyed from the inlet valve to the solid outlet valve by means of the screw conveyor.

The use of CO₂ as an inert gas can favor this reaction by also collaborating in the chemical reaction that has been described.

The torrefaction step will generate a gas fraction which will contain the desired, high added value compounds, and a solid fertilizer fraction or a product for soil improvement.

The gas fraction will be extracted from the second reactor through the gas outlet valve of the second reactor. Said gas fraction will then be introduced into a condenser where a liquid fraction at room temperature will be separated from a gas fraction at room temperature.

As result of the process that has been described, the obtained liquid fraction will contain an organic liquid phase comprising C14-C18 biofuel and phenols, and an aqueous liquid phase comprising sugars and acids comprising acetic acid.

The organic liquid and aqueous liquid phases can then be separated by density, with one phase floating on top of the other phase in strata.

According to another proposed embodiment, the catalyst will be metered for obtaining a biomass mixture with a pH comprised between 8.5 and 9.5. For example, it is contemplated to meter the catalyst such that it represents between 2% and 12% of the weight of the biomass with which it mixes.

Likewise, in a preferred embodiment it is proposed for the described method to be performed continuously, where the biomass is introduced into the first reactor at a controlled speed, and where the screw conveyors of the first reactor and the second reactor are adjusted so that the biomass remains inside the first reactor and inside the second reactor for the times mentioned above, and so that the indicated temperature gradients are generated.

In some cases, and particularly for all pruning of biomass originating from agricultural waste such as grapevines, olive trees, apple trees, tomatoes and others, it is contemplated for the catalyst to also include lanthanide and/or cerium earth oxides. This can be particularly beneficial according to the type of biomass introduced into the system.

Preferably, the catalyst will be mixed with the biomass in the form of dry powder, which increases the contact surface thereof and speeds up the reaction.

Also preferably, the biomass used will be selected from peels, i.e., waste from pressing plant material, grape peels, apple peels, tomato peels, olive meal, i.e., waste generated from the pressing of olives, where it can also be applied to a large number of lignocellulosic agricultural waste and/or waste containing phenolic functional groups, such as waste from pruning olive trees, grapevines, apple trees, or tomato plants.

Optionally, the torrefied solid fraction extracted from the second reactor is introduced into a third cooling reactor which has features similar to the first and second reactors, but lacking both thermal insulation and heaters, and is connected to a cooler, for example, through cooling fluid ducts. It is contemplated for said cooling device to be a heat recovery device which recovers heat from the biomass and uses it for other purposes within the same plant.

It will also be understood that the end values of any offered range of values may not be optimum and this range of values may require adaptations of the invention so that said end values are applicable, said adaptations being within the reach of a person skilled in the art.

Other features of the invention will be seen in the following detailed description of an embodiment.

### Brief Description of the Drawings

The foregoing and other advantages and features will be better understood based on the following detailed description of an embodiment in reference to the attached drawings which must be interpreted in an illustrative and non-limiting manner, in which:

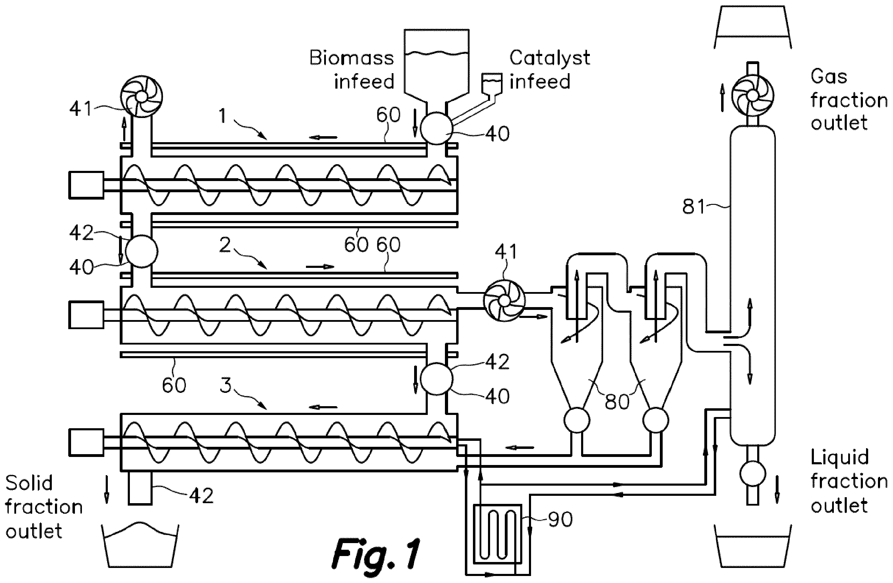

Figure 1 is a schematic view of a valorization plant provided with a first reactor where the drying step is performed, a second reactor where the torrefaction step is performed, and a third reactor where a cooling step is performed, the three reactors being connected in series, and additionally having two cyclonic filters and a condenser for separating the solid, liquid and gas fractions obtained from the torrefaction of the biomass in the second reactor.

### Detailed Description of several Embodiments

The attached drawing will serve as a basis for several non-limiting embodiments of the present invention.

According to a preferred embodiment, the proposed method for treating the biomass of lignocellulosic agricultural waste and/or waste containing phenolic functional groups is applied by means of an industrial plant for thermochemical treatment of biomass under near-anoxic or anoxic conditions that is described below in an illustrative and non-limiting manner and shown in a schematic manner in Figure 1.

The purpose of the proposed method is to convert the biomass into a different product or different products, obtaining solid, liquid and/or gas fractions that are of commercial interest and have greater economic value than that of the biomass used for obtaining same.

In this example, the biomass of lignocellulosic agricultural waste and/or waste containing phenolic functional groups used will be waste generated from the pressing of, preferably, olives or grapes, although waste generated from the pressing of other plants, or even waste generated from the pruning of these plants, are contemplated.

The proposed industrial valorization plant includes a first reactor implementing a biomass drying step, a second reactor implementing a biomass torrefaction step, and a third reactor implementing a cooling step for cooling the remaining solid fraction after the first two steps have been completed.

In this embodiment, each of the first, second and third reactors comprise the following components:
- a cylindrical thermochemical reaction chamber demarcated by a cylindrical wall and by a closed first end and a closed second end;
- an inlet valve provided in a position adjacent to the first end of the thermochemical reaction chamber, provided for feeding said reaction chamber with biomass at a controlled speed, preventing the free entry of air into said reaction chamber;
- a gas outlet valve provided for extracting a gas fraction of the treated biomass, and a solid outlet valve provided for extracting a solid fraction of the treated biomass, both located in a position adjacent to the second end of the reaction chamber, and both preventing the free entry of air into said reaction chamber;
- a screw conveyor fixed to a drive shaft and operated by means of an actuator;
furthermore the first and the second reactors will additionally include
- a thermal insulator arranged around said thermochemical reaction chamber, surrounding it;
- a plurality of heaters arranged both around the thermochemical reaction chamber and inside the shaft of the screw conveyor, provided for adjustably heating said thermochemical reaction chamber.

In this case the heaters will consist of electric heaters that are either resistances or infrared-emitting electric heaters.

A system for condensing the gas fraction by cooling, optionally including cyclonic filtration of the solid particles of the gas fraction, and a system for separating liquid fractions by density, will complete the plant.

In the example shown in the attached Figure 1, two cyclonic centrifuges are arranged in series, and it is contemplated for said cyclonic centrifuges to be thermally insulated or to even be heated to prevent condensation of the torrefied gas fraction therein. The solid particles obtained from this process can be disposed of or mixed with the torrefied solid fraction.

According to the present embodiment, the proposed method consists of mixing the biomass of lignocellulosic agricultural waste and/or waste containing phenolic functional groups, said biomass having a water content preferably equal to or less than 20% and having been ground until obtaining a granular composition with fragments having a mean size between 1 and 10 mm, preferably between 2 to 6 mm, with a catalyst comprising at least a mixture of calcium and magnesium carbonates in the form of powder, at a ratio of 10 to 1 by weight with respect to the biomass with which it mixes.

The biomass resulting from said mixing is introduced into the first reactor through the inlet valve thereof at room temperature for performing a drying step.

The screw conveyor inside said first reactor will be adjusted to move the biomass along the entire length of the first reactor in a time between 2 and 3 minutes. Therefore, the speed of introducing the biomass through the inlet valve and the operating speed of the screw conveyor will be coordinated, for example, by means of a controller device, such as a programmable logic controller.

The heaters of the first reactor will increase the temperature of the biomass to a temperature close to 190°C, without ever reaching 200°C, for the time that said biomass remains inside the first reactor, causing the evaporation of the water contained in the biomass, which will form vapor.

The vapor will be discharged through the gas outlet valve of the first reactor and released into the atmosphere.

The dry biomass resulting from the drying step is then extracted from the first reactor through the solid outlet valve, pushed by the screw conveyor, and immediately introduced into the second reactor through the inlet valve thereof, preventing the entry of outside air into the second reactor.

An inert gas, in this case CO₂, is also injected into the second reactor to displace the rest of the O₂ that may remain inside the second reactor, thereby assuring anoxic conditions.

The heaters inside the second reactor will increase the temperature of the biomass above 200°C, being able to reach 300°C, depending on the type of biomass introduced, causing torrefaction of the dry biomass and stimulating the chemical reaction with the included catalyst, releasing gases and vapors. In no case will the mentioned 300°C be exceeded, because in such case a pyrolysis reaction that would destroy some of the compounds to be obtained would start.

The screw conveyor of the second reactor will be configured for conveying the dry biomass along the entire length of the second reactor in about 3 minutes, during which time said torrefaction step will take place.

The torrefied gas fraction resulting from said torrefaction, including said released vapors and gases, will be extracted from the second reactor 2 through its gas outlet valve 41, and cooled in a condensation tower 81 after filtering out the solid particles in a cyclonic filter 80, obtaining at least an organic liquid phase comprising C14-C18 biofuel and phenols, and an aqueous liquid phase comprising sugars and acids comprising acetic acid, said liquid phases being able to be separated by density.

The torrefied solid waste contained in the second reactor 2 has properties as a soil improver and/or fertilizer (requiring the addition of a complementary substance in some cases), for example a soil improver for regulating acidity, and can be extracted from the second reactor 2 through the solid outlet valve 42 so that it can be extracted from the plant for use after going through a third reactor 3 where a cooling step is applied.

The condensation tower 81 can be cooled by means of a cooling fluid in a cooler 90 integrated in the plant. Said cooler can also be responsible for cooling the mentioned third reactor 3, achieving rapid cooling of the torrefied solid fraction contained therein.

It will be understood that the different parts making up the invention described in one embodiment can be freely combined with parts described in other different embodiments even though said combination has not been explicitly described, provided that the combination does not entail a disadvantage and falls in the scope of the appended claims.

## Claims

1. A method for treating the biomass of lignocellulosic agricultural waste and/or waste containing phenolic functional groups to obtain a product for soil improvement or a fertilizer, a biofuel, phenolic products and other by-products, wherein the biomass is treated at least in a first elongated thermochemical reaction reactor (1) and a second elongated thermochemical reaction reactor (2) that are connected in line, each first and second reactors (1 and 2) being provided with:
• a closed cylindrical thermochemical reaction chamber (20);
• an inlet valve (40) in a position adjacent to the first end of the thermochemical reaction chamber (20), preventing the free entry of air;
• a gas outlet valve (41) which allows extracting a gas fraction of the treated biomass and a solid outlet valve (42) which allows extracting a solid fraction of the treated biomass, said gas outlet valve (41) and solid outlet valve (42) being provided in positions adjacent to the second end (22) of the thermochemical reaction chamber (20), preventing the free entry of air;
• a screw conveyor (50) attached to a drive shaft (51) operated by an actuator device;
• a plurality of heaters (60) provided for adjustably heating said thermochemical reaction chamber (20);
**characterized in that** the method comprises the following steps:
a) introducing the biomass ground to a given particle size into the first reactor through said inlet valve (40), said biomass including a catalyst comprising at least a mixture of calcium and magnesium carbonates;
b) performing a drying step inside the first reactor for a time comprised between 2 and 3 minutes by applying a first temperature gradient ranging from an introduction temperature to a temperature comprised between 120°C and 190°C, causing the evaporation of the water contained in the biomass mixture and obtaining a dry biomass;
c) extracting, through the mentioned gas outlet valve (41) of the first reactor, a gas fraction containing water vapor from the first reactor;
d) introducing into the second reactor, through the inlet valve (40) thereof, the dry biomass previously extracted from the first reactor through the solid outlet valve (42);
e) introducing an inert gas into the second reactor, establishing anoxic atmospheric conditions inside the second reactor;
f) performing a torrefaction step inside the second reactor for a time comprised between 3 and 3.5 minutes by applying a second temperature gradient ranging from an introduction temperature to a temperature comprised between 200°C and 300°C, causing torrefaction of the dry biomass and the reaction thereof with the catalyst, producing a torrefied solid fraction that can be recovered as a fertilizer or for soil improvement and a torrefied gas fraction;
g) discharging the torrefied gas fraction through the gas outlet valve (41) of the second reactor (2) and liquefying a part of the torrefied gas fraction discharged from the second reactor (2) by condensation, obtaining at least an organic liquid phase comprising C14-C18 biofuel and phenols, and an aqueous liquid phase comprising sugars and acids including at least acetic acid, said liquid phases being separated by density; and
h) discharging the torrefied solid fraction through the solid outlet valve (42) of the second reactor (2), being said torrefied solid fraction usable for soil improvement or as a fertilizer.

2. The method according to claim 1, wherein the catalyst is metered for obtaining a biomass mixture with a pH comprised between 8.5 and 9.5.

3. The method according to claim 1 or 2, wherein the catalyst is metered representing between 2% and 12% of the weight of the wet biomass.

4. The method according to any one of the preceding claims, wherein the method is performed continuously from the first reactor to the second reactor, which reactors are connected to one another.

5. The method according to any one of the preceding claims, wherein the maximum temperature of the first temperature gradient of the first reactor is comprised between 160°C and 190°C.

6. The method according to any one of the preceding claims, wherein the introduction temperature for introducing the waste into the first reactor is room temperature.

7. The method according to any one of the preceding claims, wherein the initial maximum moisture content of the biomass introduced into the first reactor is 20%.

8. The method according to any one of the preceding claims, wherein the inert gas introduced into the second reactor is CO₂ and/or N₂.

9. The method according to any one of the preceding claims, wherein the biomass introduced into the first reactor is pruning waste and wherein the catalyst also includes lanthanide and/or cerium earth oxides.

10. The method according to any one of the preceding claims, wherein the catalyst is mixed with the biomass in the form of dry powder.

11. The method according to any one of the preceding claims, wherein the biomass used is selected from peels, grape peels, apple peels, tomato peels, olive meal, waste from pruning olive trees, grapevines, apple trees, or tomato plants.

12. The method according to any one of the preceding claims, wherein the solid fraction extracted from the second reactor is introduced into a third cooling reactor.

## Patentansprüche

1. Verfahren zur Behandlung der Biomasse von lignocellulosischem landwirtschaftlichem Abfall und/oder von Abfall mit phenolischen funktionellen Gruppen, um ein Produkt zur Bodenverbesserung oder ein Düngemittel, einen Biobrennstoff, phenolische Produkte und andere Nebenprodukte zu erhalten, wobei die Biomasse mindestens in einem ersten länglichen thermochemischen Reaktionsreaktor (1) und einem zweiten länglichen thermochemischen Reaktionsreaktor (2), welche in Reihe verbunden sind, behandelt wird, wobei jeder der ersten und zweiten Reaktoren (1 und 2) mit Folgendem versehen ist:
• einer geschlossenen zylindrischen thermochemischen Reaktionskammer (20);
• einem Einlassventil (40) in einer dem ersten Ende der thermochemischen Reaktionskammer (20) benachbarten Stellung, welches den freien Zugang von Luft verhindert;
• einem Gasauslassventil (41), welches das Entnehmen einer Gasfraktion der behandelten Biomasse erlaubt, und einem Feststoffauslassventil (42), welches das Entnehmen einer Feststofffraktion der behandelten Biomasse erlaubt, wobei das genannte Gasauslassventil (41) und das genannte Feststoffauslassventil (42) in dem zweiten Ende (22) der thermochemischen Reaktionskammer (20) benachbarten Stellungen vorgesehen sind, so dass der freie Zugang von Luft verhindert wird;
• einem Schneckenförderer (50), welcher an einer Antriebswelle (51) befestigt ist, welche von einer Betätigungsvorrichtung betrieben wird;
• einer Vielzahl von Heizelementen (60), welche dazu vorgesehen sind, die genannte thermochemische Reaktionskammer (20) einstellbar zu heizen;
**dadurch gekennzeichnet, dass** das Verfahren die folgenden Schritte umfasst:
a) das Einführen der Biomasse, welche bis zu einer gegebenen Partikelgröße gemahlen worden ist, in den ersten Reaktor durch das genannte Einlassventil (40), wobei die genannte Biomasse einen Katalysator beinhaltet, welcher mindestens eine Mischung aus Calcium- und Magnesiumcarbonaten umfasst;
b) das Durchführen eines Trocknungsschrittes innerhalb des ersten Reaktors eine Zeit lang, welche zwischen 2 und 3 Minuten liegt, durch das Anwenden eines ersten Temperaturgradienten, welcher zwischen einer Einführungstemperatur und einer Temperatur, welche zwischen 120ºC und 190ºC liegt, schwankt, so dass die Verdampfung des in der Biomassenmischung enthaltenen Wassers und hervorgerufen wird eine trockene Biomasse erhalten wird;
c) das Entnehmen, durch das erwähnte Gasauslassventil (41) des ersten Reaktors, einer Gasfraktion, welche Wasserdampf aus dem ersten Reaktor enthält;
d) das Einführen in den zweiten Reaktor, durch das Einlassventil (40) desselben, der trockenen Biomasse, welche zuvor aus dem ersten Reaktor durch das Feststoffauslassventil (42) entnommen wurde;
e) das Einführen eines Inertgases in den zweiten Reaktor, unter Herstellung anoxischer atmosphärischer Bedingungen innerhalb des zweiten Reaktors;
f) das Durchführen eines Torrefizierungsschrittes innerhalb des zweiten Reaktors eine Zeit lang, welche zwischen 3 und 3,5 Minuten liegt, durch das Anwenden eines zweiten Temperaturgradienten, welcher zwischen einer Einführungstemperatur und einer Temperatur, welche zwischen 200ºC und 300ºC liegt, schwankt, so dass die Torrefizierung der trockenen Biomasse und die Reaktion derselben mit dem Katalysator hervorgerufen wird, unter Herstellung einer torrefizierten Feststofffraktion, welche als Düngemittel oder zur Bodenverbesserung zurückgewonnen werden kann, und einer torrefizierten Gasfraktion;
g) das Abführen der torrefizierten Gasfraktion durch das Gasauslassventil (41) des zweiten Reaktors (2) und das Verflüssigen eines Teils der torrefizierten Gasfraktion, welche vom zweiten Reaktor (2) abgeführt wird, mittels Kondensation, unter Erhalt mindestens einer organischen Flüssigphase, welche C14-C18-Biobrennstoff und Phenole umfasst, und einer wässrigen Flüssigphase, welche Zucker und Säuren, inklusive mindestens Essigsäure, umfasst, wobei die genannten Flüssigphasen mittels Dichte getrennt werden; und
h) das Abführen der torrefizierten Feststofffraktion durch das Feststoffauslassventil (42) des zweiten Reaktors (2), wobei die genannte torrefizierte Feststofffraktion zur Bodenverbesserung oder als Düngemittel verwendet werden kann.

2. Verfahren nach Anspruch 1, wobei der Katalysator dosiert wird, um eine Biomassenmischung mit einem pH-Wert, welcher zwischen 8,5 und 9,5 liegt, zu erhalten.

3. Verfahren nach Anspruch 1 oder 2, wobei der Katalysator derart dosiert wird, dass er zwischen 2% und 12% des Gewichts der feuchten Biomasse darstellt.

4. Verfahren nach einem der vorhergehenden Ansprüche, wobei das Verfahren vom ersten Reaktor zum zweiten Reaktor kontinuierlich durchgeführt wird, welche Reaktoren miteinander verbunden sind.

5. Verfahren nach einem der vorhergehenden Ansprüche, wobei die maximale Temperatur des ersten Temperaturgradienten des ersten Reaktors zwischen 160ºC und 190ºC liegt.

6. Verfahren nach einem der vorhergehenden Ansprüche, wobei die Einführungstemperatur für das Einführen des Abfalls in den ersten Reaktor die Raumtemperatur ist.

7. Verfahren nach einem der vorhergehenden Ansprüche, wobei der anfängliche maximale Feuchtigkeitsgehalt der in den ersten Reaktor eingeführten Biomasse 20% ist.

8. Verfahren nach einem der vorhergehenden Ansprüche, wobei das in den zweiten Reaktor eingeführte Inertgas CO₂ und/oder N₂ ist.

9. Verfahren nach einem der vorhergehenden Ansprüche, wobei die in den ersten Reaktor eingeführte Biomasse Schnittholz ist und wobei der Katalysator auch Lanthanide und/oder Erdceroxide beinhaltet.

10. Verfahren nach einem der vorhergehenden Ansprüche, wobei der Katalysator mit der Biomasse in Form von Trockenpulver gemischt wird.

11. Verfahren nach einem der vorhergehenden Ansprüche, wobei die verwendete Biomasse aus Schalen, Traubenschalen, Apfelschalen, Tomatenschalen, Olivenschrot, Abfall von ausgeschnittenen Olivenbäumen, Weinreben, Apfelbäumen oder Tomatenpflanzen ausgewählt wird.

12. Verfahren nach einem der vorhergehenden Ansprüche, wobei die aus dem zweiten Reaktor entnommenen Feststofffraktion in einen dritten Kühlungsreaktor eingeführt wird.

## Revendications

1. Une méthode pour traiter la biomasse de déchets agricoles lignocellulosiques et/ ou de déchets contenant des groupes fonctionnels phénoliques pour obtenir un produit pour amélioration du sol ou un fertilisant, un biocarburant, des produits phénoliques et autres sous-produits, dans laquelle la biomasse est traitée au moins dans un premier réacteur de réaction thermochimique allongé (1) et un deuxième réacteur de réaction thermochimique allongé (2) qui sont connectés en ligne, chacun des premier et deuxième réacteurs (1 et 2) étant pourvus de :
• une chambre de réaction thermochimique cylindrique fermée (20) ;
• une soupape d'admission (40) dans une position adjacente à la première extrémité de la chambre de réaction thermochimique (20) empêchant l'entrée libre de l'air ;
• une soupape d'échappement de gaz (41) qui permet d'extraire une fraction du gaz de la biomasse traitée et une soupape d'échappement de solide (42) qui permet d'extraire une fraction solide de la biomasse traitée, ces soupapes d'échappement de gaz (41) et soupape d'échappement de solide (42) étant prévues dans des positions adjacentes à la deuxième extrémité (22) de la chambre de réaction thermochimique (20), empêchant l'entrée libre de l'air ;
• un transporteur à vis (50) relié à un arbre de transmission (51) actionné par un dispositif actionneur ;
• une pluralité d'appareils de chauffage (60) prévus pour le chauffage réglable de cette chambre de réaction thermochimique (20) ;
**caractérisée en ce que** la méthode comporte les étapes suivantes :
a) introduire la biomasse moulue à une certaine taille des particules dans le premier réacteur à travers cette soupape d'admission (40), cette biomasse comprenant un catalyseur comportant au moins un mélange de carbonates de calcium et de magnésium ;
b) effectuer une étape sèche à l'intérieur du premier réacteur durant un temps compris entre 2 et 3 minutes en appliquant un premier gradient de température se situant entre une température d'introduction et une température comprise entre 120ºC et 190ºC, causant l'évaporation de l'eau contenue dans le mélange de biomasse et en obtenant une biomasse sèche ;
c) extraire, à travers cette soupape d'échappement de gaz (41) du premier réacteur, une fraction de gaz contenant de la vapeur d'eau du premier réacteur ;
d) introduire dans le deuxième réacteur, à travers sa soupape d'admission (40), la biomasse sèche préalablement extraite du premier réacteur à travers la soupape de sortie de solide (42) ;
e) introduire un gaz inerte dans le deuxième réacteur, en établissant des conditions atmosphériques anoxiques à l'intérieur du deuxième réacteur ;
f) effectuer une étape de torréfaction à l'intérieur du deuxième réacteur durant un temps se situant entre 3 et 3,5 minutes en appliquant un deuxième gradient de température se situant entre une température d'introduction et une température comprise entre 200ºC et 300ºC, causant la torréfaction de la biomasse sèche et sa réaction avec le catalyseur, en produisant une fraction de solide torréfiée pouvant être récupérée comme fertilisant ou pour améliorer le sol et une fraction de gaz torréfiée ;
g) décharger la fraction de gaz torréfié à travers la soupape de sortie (41) du deuxième réacteur (2) et liquéfier une partie de la fraction de gaz torréfiée déchargée du deuxième réacteur (2) par condensation, en obtenant au moins une phase liquide organique comportant du biocarburant C14-C18 et des phénols et une phase de liquide aqueuse comportant des sucres et des acides comprenant au moins de l'acide acétique, ces phases liquides étant séparées par densité ; et
h) décharger la fraction de solide torréfiée à travers la soupape de sortie de solide (42) du deuxième réacteur (2) cette fraction de solide torréfiée étant utilisable pour améliorer le sol ou comme fertilisant.

2. Le méthode conformément à la revendication 1, dans laquelle le catalyseur est dosé pour obtenir un mélange de biomasse ayant un pH compris entre 8,5 et 9,5.

3. La méthode conformément à la revendication 1 ou 2, dans laquelle le catalyseur est dosé représentant entre 2% et 12% du poids de la biomasse humide.

4. La méthode conformément à une quelconque des revendications précédentes, dans laquelle la méthode est mise en œuvre en continu du premier réacteur au deuxième réacteur, ces réacteurs étant reliés entre eux.

5. La méthode conformément à une quelconque des revendications précédentes, dans laquelle la température maximale du premier gradient de température du premier réacteur est comprise entre 160ºC et 190ºC.

6. La méthode conformément à une quelconque des revendications précédentes, dans laquelle la température d'introduction pour introduire les déchets dans le premier réacteur est la température ambiante.

7. La méthode conformément à une quelconque des revendications précédentes, dans laquelle la teneur d'humidité maximale initiale de la biomasse introduite dans le premier réacteur est de 20%.

8. La méthode conformément à une quelconque des revendications précédentes, dans laquelle le gaz inerte introduit dans le deuxième réacteur est CO₂ et/ou N₂.

9. La méthode conformément à une quelconque des revendications précédentes, dans laquelle la biomasse introduite dans le premier réacteur est de déchets d'élagage et dans laquelle le catalyseur comprend également des oxydes de lanthanide et/ou de terre de cérium.

10. La méthode conformément à une quelconque des revendications précédentes, dans laquelle le catalyseur est mélangé avec la biomasse sous forme de poudre sèche.

11. La méthode conformément à une quelconque des revendications précédentes, dans laquelle la biomasse utilisée est sélectionnée parmi des pelures, des pelures de raisin, des pelures de pommes, des pelures de tomates, de la farine d'olive, des déchets provenant de l'élagage d'oliviers, vignes, pommiers ou plantes de tomates.

12. La méthode conformément à une quelconque des revendications précédentes, dans laquelle la fraction de solide extraite du deuxième réacteur est introduite dans un troisième réacteur de refroidissement.
